# EUROPEAN PATENT APPLICATION

(11) **EP 4 807 457 A1**
(43) Date of publication of application: **16.09.2026**
(21) Application number: 26162624.6
(22) Date of filing: 05.03.2026
(51) Int. Cl.: G03G 15/16

(54) **COATING MATERIAL, TRANSFER MEMBER, TRANSFER DEVICE, AND IMAGE FORMING APPARATUS**

(30) Priority: 11.03.2025 JP 2025038233
(71) Applicant: Konica Minolta, Inc., Tokyo 100-7015 (JP)
(72) Inventor: MAEDA, Seisuke, Tokyo, 100-7015 (JP); HAYASE, Toru, Tokyo, 100-7015 (JP)
(74) Representative: MFG Patentanwälte Meyer-Wildhagen Meggle-Freund Gerhard PartG mbB

(57) **Abstract**

A coating material that is used for coating a transfer member (201) included in an image forming apparatus, the coating material including a resin having a urethane structure as a resin component. The coating material does not include a resin containing a fluorine atom and a resin containing a silicon atom, and when a component based on hydrogen bonding and dipole-dipole interaction of surface free energy in a coating film after coating is defined as γ_{SV}^{h} and a dispersion component of the surface free energy is defined as γ_{SV}^{d}, 0. 1≤γ _{SV}^{h}≤7 and 0. 1≤γ _{SV}^{d}≤40 are satisfied.

## Description

### BACKGROUND OF THE INVENTION

### TECHNICAL FIELD

The present disclosure relates to a coating material, a transfer member, a transfer device, and an image forming apparatus. More specifically, the present invention relates to a coating material that does not contain both a fluorine-based compound and a silicone-based compound and has excellent toner releasability when coated on a surface of a transfer member. The present invention also relates to a transfer member whose surface is coated with the coating material, a transfer device including the transfer member, and an image forming apparatus including the transfer device.

### DESCRIPTION OF RELATED ART

A surface of a functional part of a transfer system such as a transfer roller provided in an image forming apparatus may be coated with a coating material containing a fluorine-based compound in order to ensure toner releasability. In recent years, restrictions on the use of fluorine compounds, as represented by the PFAS regulations, have been studied due to concerns about the environment of fluorine-based compounds. In order to comply with the PFAS regulations, a coating capable of ensuring releasability without containing a fluorine-based compound is required.

With respect to the releasability, a fluorine-based compound having small surface free energy is advantageous. On the other hand, a coating material containing a Si element has been proposed as an alternative material (see, for example, Japanese Unexamined Patent Publication No. 2024-013656).

### SUMMARY OF THE INVENTION

However, the coating material containing a Si element has a large affinity for silica externally added to the toner, and therefore has a large adhesion force to the toner. Therefore, in a case where the surface of the functional part of the transfer system is coated with the coating material containing the Si element, when the toner adhering to the functional part of the transfer system is cleaned only by the electric field, there is a problem in that the toner adhering to the functional part of the transfer system is not sufficiently cleaned. Therefore, there is a demand for a coating material that does not contain a fluorine-based compound and can release a toner from function parts of a transfer system by an electric field while maintaining low surface free energy in order to secure releasability. Hereinafter, the functional part of the transfer system may be referred to as a transfer system part. Further, the surface of the transfer system part may be referred to as a transfer system part surface.

The present disclosure has been made in consideration of the above-mentioned problems and situations. A problem to be solved by the present disclosure is to provide a coating material that does not contain both a fluorine-based compound and a silicone-based compound and has good toner releasability when coated on a surface of a transfer member. A problem to be solved by the present disclosure is to provide a transfer member whose surface is coated with the coating material, a transfer device including the transfer member, and an image forming apparatus including the transfer device.

In order to solve the above-described problems, the inventors of the present disclosure focused on the surface free energy of a coating material for coating a functional part of a transfer system, and conducted intensive studies. As a result, the present inventors have found that the above-described problem is solved by a coating material that includes a polymer including a urethane structure as a polymer component and has a surface free energy in a specific range. That is, it has been found that the coating material can improve toner releasability even when the polymer contained therein does not contain both a fluorine atom and a silicon atom, which has led to the present disclosure. That is, the above-described problem according to the present disclosure is solved by aspects of the following means.

To achieve at least one of the abovementioned objects, according to an aspect of the present invention, coating material reflecting one aspect of the present invention is a coating material that is used for coating a transfer member included in an image forming apparatus, the coating material comprising a resin having a urethane structure as a resin component, wherein
the coating material does not include a resin containing a fluorine atom and a resin containing a silicon atom, and
when a component based on hydrogen bonding and dipole-dipole interaction of surface free energy in a coating film after coating is defined as γ_{SV}^{h} and a dispersion component of the surface free energy is defined as γ_{SV}^{d}, 0. 1≤γ _{SV}^{h}≤7 and 0. 1≤γ _{SV}^{d}≤40 are satisfied.

### BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention, wherein:
Fig. 1 is a schematic diagram illustrating a cross section of a transfer roller that is a transfer member whose surface is coated with a coating material in an embodiment of the present disclosure;
Fig. 2 is a schematic diagram schematically illustrating a cross section of a transfer belt that is a transfer member whose surface is coated with a coating material in an embodiment of the present disclosure;
FIG. 3 is a schematic diagram schematically showing an image forming apparatus including a transfer device having a transfer member whose surface is coated with an embodiment of the coating material of the present disclosure; and
Fig. 4 is a block diagram illustrating an example of a configuration of an image forming apparatus according to an embodiment of the present disclosure.

### DETAILED DESCRIPTION

Hereinafter, one or more embodiments of the present invention will be described with reference to the drawings. However, the scope of the invention is not limited to the disclosed embodiments.

### 1 Coating material

One embodiment of the coating material of the present disclosure includes a resin having a urethane structure as a resin component. The coating material of the present embodiment does not include a resin containing a fluorine atom and a resin containing a silicon atom. The coating material of the present embodiment satisfies the requirements of "0. 1≤γ_{SV}^{h}≤7" and "0. 1≤γ _{SV}^{d}≤40". The γ_{SV}^{h} is components (polar components) based on hydrogen bonding and dipole-dipole interactions of surface free energy in the coating film (coated layer) after coating.

γ_{SV}^{d}, is a dispersion component of the above surface free energy. The coating material of the present embodiment is a coating material used for coating a transfer member included in an image forming apparatus. The coating material of the present embodiment is a coating material for forming a coated layer constituting the outermost periphery of the transfer member. The component based on hydrogen bonding and dipole-dipole interaction (polar component) of the surface free energy is a component obtained by combining the hydrogen bonding component and the component based on dipole-dipole interaction of the surface free energy.

Since the coating material of the present embodiment has the above-described configuration, excellent toner releasability is attained when the coating material is coated on the surface of a transfer member without containing both a fluorine-based compound and a silicone-based compound. A γ_{SV}^{h} of more than 7 is not preferred because the power of separating the toner from the coating film surface due to the electric field in electric field cleaning becomes smaller than the power of attracting the coating film surface and the inorganic particles of the toner to each other, thereby reducing the toner releasability. The lower the γ_{SV}^{h} is, the more preferable it is for the toner releasability, but in practice, the lower limit is 0.1. A y_{SV}^{d} of more than 40 is not preferred because the power of separating the toner from the coating film surface due to the electric field in the electric field cleaning becomes smaller than the power of attracting the coating film surface to the resin particles of the toner, thereby reducing the toner releasability. The lower the γ_{SV}^{d} is, the more preferable it is for the toner releasability, but in practice, the lower limit is 0.1.

In the coating material of the present embodiment, the surface free energy is a value calculated using Owens and Wendt's theoretical formula. To be specific, it is a value obtained by solving a binary linear equation of the following two mathematical expressions (Formula A and Formula B). The unknowns in the system of equations according to Formula A and Formula B are γ_{SV}^{d}and γ_{SV}^{h}.${\left({{γ}_{SV}}^{d}{{γ}_{LV 1}}^{d}\right)}^{1 / 2} + {\left({{γ}_{SV}}^{h}{{γ}_{LV 1}}^{h}\right)}^{1 / 2} = {γ}_{L 1} \left(1+cos θ1\right) / 2 .$ ${\left({{γ}_{SV}}^{d}{{γ}_{LV 2}}^{d}\right)}^{1 / 2} + {\left({{γ}_{SV}}^{h}{{γ}_{LV 2}}^{h}\right)}^{1 / 2} = {γ}_{L 2} \left(1+cos θ2\right) / 2 .$

In the above formula A and formula B, γ _{SV}^{d} is the dispersion component of the surface free energy of the target solid (coating film of the coating material). γ_{SV}^{h} is the component based on hydrogen bonding and dipole-dipole interaction (polar component) of the surface free energy of the target solid (coating film of the coating material). γLV1d is the dispersion component of the surface free energy of the liquid 1 whose components are known. γLV1h is the polar component of the surface energy of the liquid 1 whose components are known. γLV2d is the dispersion component of the surface free energy of the liquid 2 whose components are known. yLV2h is the polar component of the surface energy of the liquid 2 whose components are known. γL1 is the surface free energy of water. γL2 is the surface free energy of diiodomethane. θ1 is the contact angle between the target solid and the liquid 1. θ2 is the contact angle between the target solid and the liquid 2.

The liquid 1 is preferably water. The liquid 2 is preferably diiodomethane.

### (1-1) Composition of coating material

The coating material of the present embodiment contains a resin component, and preferably further contains organic particles, dispersion aid, and the like.

### (1-1-1) Resin component

The coating material according to the present embodiment includes a resin having a urethane structure as a resin component. The urethane structure of the resin having a urethane structure is a structure obtained by a reaction between a polyisocyanate and a polyol.

Examples of the polyisocyanate which is a raw material of the resin having a urethane structure can include tolylene diisocyanate (TDI), pentamethylene diisocyanate (PDI), hexamethylene diisocyanate (HDI), isophorone diisocyanate (IPDI), bis (isocyanatomethyl) cyclohexane(H6XDI), xylylene diisocyanate (XDI) and the like.

Examples of the polyol which is a raw material of the resin having a urethane structure can include polycarbonate polyol, polyether polyol, polyester polyol, vegetable oil polyol, polyolefin polyol, acrylic polyol and the like.

The resin having a urethane structure is preferably obtained by polymerizing a polyisocyanate and a polyol. The blending ratio of the polyisocyanate and the polyol is not particularly limited, but it is preferably prepared so that the surface free energy of the coating film by the obtained coating material satisfies the requirements of the coating material of the present embodiment. The resin having a urethane structure preferably has a tensile strength of 20 to 80 MPa when formed into a coating film. When the resin having a urethane structure is formed into a coating film, since the tensile strength is within such a range, the coating film has sufficient strength against abrasion with paper and can maintain the function and secure a desired part life. A method for measuring the tensile strength is as follows. The tensile strength is obtained by preparing a tensile No. 1 dumbbell-shaped test piece and measuring the tensile strength σ B (MPa) using a tensile tester (manufactured by Shimadzu Corporation: Autograph AGS- 1kNX). Furthermore, the resin having a urethane structure preferably have an elongation percentage of 100 to 500 MPa when formed into a coating film. Since the resin having a urethane structure has an elongation percentage within such a range when formed into a coating film, it can follow the compressive deformation of the roller during use, and the occurrence of cracks in the coating layer after the coating film is formed can be suppressed. The method for measuring the elongation percentage is as follows. The elongation can be measured by a method in accordance with ISO527 JIS K7161. To be specific, the elongation percentage is obtained by pulling a test piece from both sides using a tensile tester (AUTOGRAPH AGS- 1kNX, manufactured by Shimadzu Corporation) and measuring the elongation percentage at which the test piece breaks (the ratio of the elongated length to the original length).

It is preferable that the resin having a urethane structure have a glass transition temperature (Tg) of 90 °C or higher. The Tg is more preferably 90°C to 150°C, and particularly preferably 100°C to 130°C. When the Tg is less than 90 °C, tackiness may occur after coating, and the toner may not be released. The Tg can be measured by a known method such as analysis with a differential scanning calorimeter (DSC). The "Tg of the resin having a urethane structure" means the Tg of a coating film when the resin having a urethane structure is coated.

The coating material of the present embodiment may contain, as a resin component, a resin having a crosslinking bridge structure after coating, a phenol resin, a urea resin, a melamine resin, an epoxy resin, an unsaturated polyester, or the like, in addition to the resin having a urethane structure.

### (1-1-2) Organic particles

The coating material of the present embodiment preferably contains organic particles having a particle size of 100 nm to 1000 nm. The coating material according to the present embodiment can better satisfy the requirement of the surface free energy described above and the toner releasability becomes better by including such organic particles. When the particle size of the organic particles is smaller than 100 nm, the effect of further improving the releasability of the toner may not be obtained. When the particle size of the organic particles is larger than 1000 nm, the surface roughness of the transfer member becomes too large, so that the quality of an image formed on a recording medium may be deteriorated or transfer failure may occur. The particle size is an average particle size, and the average particle size is obtained using a dynamic light scattering method (ELSZ-1000, manufactured by Otsuka Electronics Co., Ltd).

The organic particles preferably include at least a resin having a styrene-acrylic structure.

The organic particles may contain, in addition to the resin having a styrene-acrylic structure, a resin having a styrene structure, a melamine structure, an acrylic structure, a methacrylic structure, a urethane structure, or the like.

The content of the organic particles in the coating material is preferably 5 to 40 parts by mass with respect to 100 parts by mass of the resin component. It is more preferable that the amount of the organic particles be 10 to 30 parts by mass relative to 100 parts by mass of the resin component. When the content of the organic particles in the coating material is less than 5 parts by mass relative to 100 parts by mass of the resin component, it may be difficult to obtain the effect of improving the releasability of the toner. When the content of the organic particles in the coating material is more than 40 parts by mass with respect to 100 parts by mass of the resin component, the stability of the coating film may be reduced, and defects due to an increase in surface roughness may occur.

### (1-1-3) Other components

The coating material of the present embodiment preferably contains water and a dispersion aid in addition to the resin component and the organic particles. As the dispersion aid, a general dispersion aid other than silicone-based dispersion aids can be used.

Further, the coating material of the present embodiment may be appropriately blended with various additives such as a filler dispersant, a reinforcing agent, a resistance adjusting agent, and a leveling agent as necessary.

### (1-2) Method for producing coating material

### (1-2-1) Method for Producing Resin Component

The method for producing the resin having a urethane structure is not particularly limited, and the resin can be produced by a known method as described above. In addition, as the resin having a urethane structure, a commercially available product may be used.

### (1-2-2) Method for producing organic particles

The method for producing the organic particles is not particularly limited, and the organic particles can be produced by a known method. As the organic particles, a commercially available product may be used.

### 2 Transfer member

### (2-1) Transfer roller

A transfer member of the present disclosure is a transfer member whose surface is coated with the coating material of the present disclosure and which is included in an image forming apparatus. The transfer member according to the present disclosure is preferably at least one of a transfer roller and a transfer belt included in an image forming apparatus. The transfer roller is preferably at least one of a primary transfer roller and a secondary transfer roller. The transfer belt is preferably at least one of a primary transfer belt and a secondary transfer belt. The primary transfer roller, the secondary transfer roller, the primary transfer belt, and the secondary transfer belt are included in the image forming apparatus.

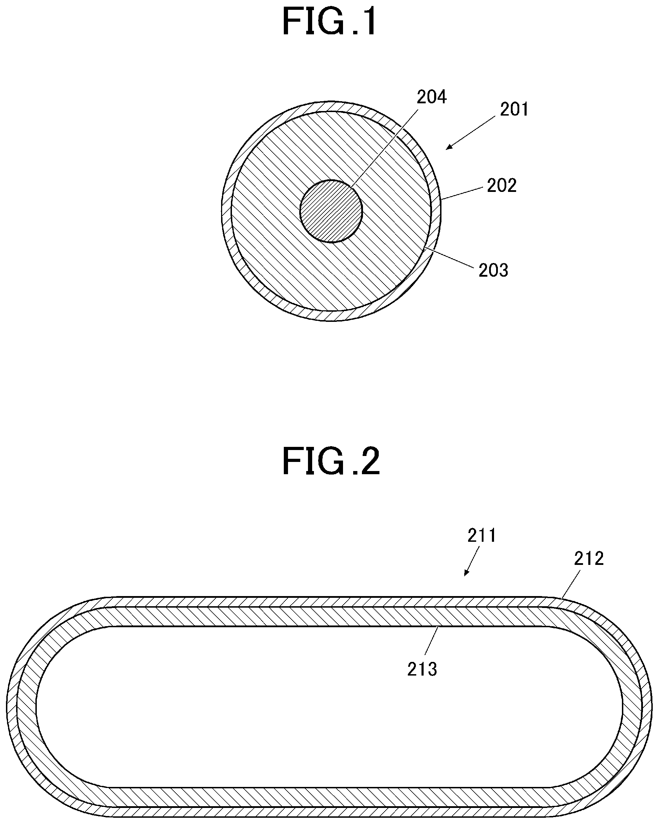

FIG. 1 is a schematic diagram schematically showing a cross section of a cylindrical transfer roller 201 which is a transfer member having a surface coated with an embodiment of the coating material of the present disclosure. The transfer roller 201 is an embodiment of the transfer member of the present disclosure. The transfer roller 201 includes a columnar rotary shaft 204, a cylindrical rubber layer 203 disposed on the outer periphery of the rotary shaft 204, and a cylindrical coated layer 202 disposed on the outer periphery of the rubber layer 203. The coated layer 202 is formed by coating (applying) the surface of the rubber layer 203 with the coating material of the present embodiment. Therefore, the coated layer 202 does not contain both the fluorine-based compound and the silicone-based compound, and is a coated layer having good toner releasability. The transfer roller 201 is a transfer roller having such a coated layer.

### (2-1-1) Coated layer

The coated layer 202 is a layer constituting the outermost surface of the transfer roller 201. The coated layer 202 is a layer formed by coating with the coating material of the present embodiment.

The thickness of the coated layer 202 is not particularly limited, but is, for example, preferably 1 to 20 µm, more preferably 3 to 15 µm, and particularly preferably 5 to 10 µm. For example, when the thickness of the coated layer 202 is too thin, it may be difficult to maintain the quality by durability due to abrasion or the like. On the other hand, if the thickness of the coated layers 202 is too large, cracking or the like of the coated layers 202 may tend to occur.

The thickness of the coated layer 202 can be measured by the following method. First, platinum/palladium is vapor-deposited on the surface of the coated layer 202 to perform metal coating. Next, the coated layer 202 and the rubber layer 203 disposed on the lower side thereof are cut in parallel to the axis direction of the rotary shaft 204. Next, the cross sections of the cut coated layer 202 and rubber layer 203 are polished by a cryo-ion milling method. The polished cross sections of the coated layer 202 and the rubber layer 203 are observed by SEM with respect to the axis direction 1 mm widths of the transfer roller 201. In the observation with the SEM, a portion between the metal coating of platinum/palladium deposited on the surface of the coated layer 202 and the rubber layer 203 disposed under the coated layer 202 is defined as the coated layer 202. The observation magnification by the SEM is set to 1000 times, and SEM observation of 10 visual fields is performed while changing the observation visual field. In each of the SEM observations of 10 visual fields, the thickness of the coated layer 202 is measured at 20 points. As described above, the arithmetic mean of the thicknesses of a total of 200 points measured at 20 points each in the SEM observation of 10 visual fields is calculated, and the calculated arithmetic mean value is set as the thickness of the coated layer 202.

The surface roughness of the transfer roller 201 is defined by the surface roughness of the coated layer 202 provided on the outermost surface of the transfer roller 201. The surface roughness of transfer roller 201 is not particularly limited, but is, for example, preferably 1 to 12 µm, and more preferably 5 to 10 µm. When the surface roughness of the transfer roller 201 is too large, the distance between the toner and the intermediate transfer belt in the concave portion is longer than the distance in the convex portion of the surface of the transfer roller 201. For this reason, the transfer electric field in the concave portion of the surface of the transfer roller 201 may be insufficient.

The surface roughness of the transfer roller 201 can be measured by the following method. That is, a mean value of ten point mean heights (JIS B0601 1994 years) measured under the following conditions is defined as the surface roughness of the transfer roller 201.

[Measurement Conditions for Surface Roughness] Measurement points: Nine points in total, i.e., three points in the long axis direction (12. 5 mm positions (two points)) and a central position (one point) from the positions of the 50 mm from both ends toward the ends on the near side) and three points in the × circumferential direction (0 °, 120 °, 240 ° by determining the vertex).
Measuring device: Surfcom1400g (manufactured by Tokyo Seimitsu Co., Ltd)
Stylus shape: cone (angle 60 °, tip radius 2 µm)
High-pass filter cut-off value: 2. 5 mm
Measurement speed:0.2mm/sec
Evaluation Length: 12. 5 mm

### (2-1-2) rubber layer

The rubber layer 203 constituting the transfer roller 201 is formed so as to cover the rotary shaft 204 which is an axial core, and is constituted by a solid elastic body. The rubber layer 203 is preferably formed using, for example, adhesive rubber, conductive rubber or semiconductive rubber in which a conductive material is added to non-adhesive rubber. Examples of the rubber serving as the material of the rubber layer 203 include nitrile rubber (NBR), ethylene-propylene rubber (EPDM), hydrin rubber, urethane rubber, acrylic rubber, and chloroprene rubber. Examples of the rubber having adhesiveness include rubber obtained by adding a tackifier such as a phenol resin, a coumarone resin, an acetylene resin, or a terpene resin to nitrile rubber (NBR), ethylene-propylene rubber (EPDM), or the like. The rubber layer 203 is preferably formed of a solid elastic body using the above-described rubber as a raw material.

The rubber layer 203 can be formed by using various rubbers as described above as a main agent. The rubber layer 203 may contain, relative to 100 parts by mass of the main agent, 1 to 100 parts by mass of a conductive material such as carbon black or quaternary ammonium for ensuring conductivity.

In addition, the rubber layer 203 may contain 0.3 to 5 parts by mass of a crosslinking agent such as sulfur, 1 to 10 parts by mass of a crosslinking aid such as zinc oxide, and 0.5 to 3 parts by mass of a crosslinking accelerator such as thiazoles, dithiocarbamates, and thiurams with respect to 100 parts by mass of the main agent.

Further, if necessary, various additives such as a lubricant and an inorganic filler may be appropriately blended in the main agent.

The method for producing the rubber layer 203 is not particularly limited, and the rubber layer 203 can be produced by a known method.

### (2-1-3) rotation axis

The structure of the rotation shaft 204 serving as the shaft core of the transfer roller 201 is not particularly limited and may be solid or hollow. The material for forming the rotary shaft 204 is not particularly limited, and examples thereof include iron, plated iron, stainless steel, aluminum, and copper. An adhesive, a primer, or the like is usually applied to the surface of the rotating shaft 204. The rotating shaft 204 is usually configured within a range of outer diameter 4 to 15 mm and within a range of length of 230 to 500 mm.

### (2-1-4) Method for Producing Transfer Roller

The transfer roller 201 can be produced by the following method. The transfer roller can be produced by an extrusion molding method. The shaft member is placed in a mold having the shape of a roller, and the mold is filled with a rubber material to form a cylindrical shape. The shaft member is disposed at the position of the rotation shaft of the transfer roller. Thereafter, steam vulcanization is performed at a temperature of 150°C to 170°C for 20 to 60 minutes, and secondary vulcanization is performed as necessary. After the vulcanization, the shaft member is pulled out, and the formed cylindrical rubber (a portion to be the rubber layer) is fitted to the rotary shaft, whereby a roller in which the outer periphery of the rotary shaft is covered with the rubber layer is obtained. As a rubber material forming the rubber layer, epichlorohydrin rubber is preferable. Examples of the epichlorohydrin rubber include an epichlorohydrin homopolymer, an epichlorohydrin-ethylene oxide binary copolymer, an epichlorohydrin-allyl glycidyl ether binary copolymer, and an epichlorohydrin-ethylene oxide-allyl glycidyl ether ternary copolymer. These epichlorohydrin rubbers may be used alone or in combination of two or more.

The coated layers are preferably formed by spray coating using a nozzle. Specifically, the coating material of the present embodiment is discharged from a nozzle while a roller in a state where the outer periphery of a rotating shaft is covered with a rubber layer is rotated at an arbitrary number of rotations. A coating film is formed by reciprocating the nozzle once in the longitudinal direction of the roll while discharging the coating material. After the formation of the coating film, the coating film is dried with a dryer at 120°C for 10 minutes to form a coated layer.

(2-2) Transfer belt Fig. 2 is a schematic diagram schematically illustrating a cross section of a transfer belt 211 that is a transfer member whose surface is coated with a coating material in an embodiment of the present disclosure. Transfer belt 211 is another embodiment of the transfer member of the present disclosure. The transfer belt 211 includes a belt body 213 in the form of an endless belt and a coated layer 212 disposed on the outer periphery of the belt body 213. The coated layer 212 is formed by coating (applying) the coating material of the present embodiment on the outer surface of the belt main body 213. Therefore, the coated layer 212 does not contain both the fluorine-based compound and the silicone-based compound, and is a coated layer having good toner releasability. Transfer belt 211 is a transfer belt including such a coated layer.

The thickness of transfer belt 211 is appropriately set in consideration of durability against stress applied to the belt during driving and external force. The thickness of transfer belt 211 is, for example, preferably 30 to 160 µm, more preferably 30 to 120 µm, and particularly preferably 50 to 100 µm.

### (2-2-1) Coated layer

Coated layer 212 is a layer forming an outermost surface of transfer belt 211. The coated layer 212 is a layer formed by coating with the coating material of the present embodiment.

The thickness of the coated layer 212 is not particularly limited, but is, for example, preferably 1 to 20 µm, more preferably 3 to 15 µm, and particularly preferably 5 to 10 µm. For example, when the thickness of the coated layer 212 is too thin, it may be difficult to maintain the quality by durability due to scraping or the like. On the other hand, if the thickness of the coated layer 212 is too large, cracking or the like of the coated layer 212 may tend to occur.

The thickness of the coated layer 212 can be measured by the following method. First, platinum/palladium is vapor-deposited on the surface of the coated layer 212 to perform metal coating. Next, the coated layer 212 and the belt main body 213 disposed on the lower side thereof are cut in parallel to the thickness direction of the belt main body 213. Next, the cross sections of the cut coated layer 212 and belt body 213 are polished by cryo-ion milling. The 1 mm widths of the polished cross sections of the coated layers 212 and the belt body 213 are observed with an SEM. In the observation with the SEM, the coated layer 212 exists between the metal coating of platinum/palladium deposited on the surface of the coated layer 212 and the belt main body 213 disposed below the coated layer 212. The observation magnification by the SEM is set to 1000 times, and SEM observation of 10 visual fields is performed while changing the observation visual field. In each of the SEM observations of 10 visual field, the thickness of the coated layer 212 is measured at 20 points. As described above, the arithmetic mean of the thicknesses of a total of 200 points measured at 20 points each in the SEM observation of 10 visual fields is calculated, and the calculated arithmetic mean value is set as the thickness of the coated layer 212.

The surface roughness of transfer belt 211 is defined by the surface roughness of coated layer 212 provided on the outermost surface of transfer belt 211. The surface roughness of transfer belt 211 is not particularly limited, but is, for example, preferably 1 to 12 µm, and more preferably 5 to 10 µm. If the surface roughness of the transfer belt 211 is excessively large, the distance between the toner and the intermediate transfer belt in a recess is longer than the distance in a convex portion on the surface of the transfer belt 211. Therefore, the transfer electric field in the concave portion of the surface of the transfer belt 211 may be insufficient.

The surface roughness of the transfer belt 211 can be measured by the following method. That is, a mean value of ten point mean heights (JIS B0601 1994 years) measured under the following conditions is defined as the surface roughness of the transfer belt 211.

[Measurement Conditions for Surface Roughness] Measurement points: nine points in total, i.e., three points in the width direction (12. 5 mm positions (two points)) and a center position (one point) from the 50 mm positions from both ends toward the respective closer ends) and three points in the lengthwise direction of the × belt (three points so as to equally divide the belt into three).
Measuring device: Surfcom1400g (manufactured by Tokyo Seimitsu Co., Ltd)
Stylus shape: cone (angle 60 °, tip radius 2 µm)
High-pass filter cut-off value: 2. 5 mm
Measurement speed:0.2mm/sec
Evaluation Length: 12. 5 mm

### (2-2-2) belt body

The belt main body 213 is preferably formed of resin. The resin forming the belt main body 213 is not particularly limited. Examples of resin that constitute the belt main body 213 include polyimide; polyamideimide; polycarbonate; Polyvinylidene fluoride (PVDF); ethylene-tetrafluoroethylene copolymer; polyamide and polyphenylene sulfide. As the resin constituting the belt body 213, one type may be selected from the above-described resins and used alone, or a mixture including two or more types of resins may be used. Examples thereof include at least one selected from among these resin, preferably, the polyimide, polyamide-imide, and, polyamide. Among these resin, polyimide is particularly preferable.

Further, the belt main body 213 preferably contains a conductive material in order to impart conductivity. Examples of the conductive material include conductive carbon-based materials such as carbon black and graphite, metals such as aluminum and copper, and alloys. Examples of the conductive material also include conductive metal oxides such as tin oxide, zinc oxide, antimony oxide, indium oxide, potassium titanate, antimony oxide-tin oxide composite oxide (ATO), and indium oxide-tin oxide composite oxide (ITO). These conductive materials may be used alone or in combination of two or more. Among these conductive materials, preferably, a conductive carbon-based material is used, or more preferably, carbon black is used. The content of the conductive material in the belt main body 213 is not particularly limited. For example, the content of the conductive material in the belt main body 213 is 5 to 30% by mass.

The belt main body 213 can be formed by molding a composition containing a resin, a solvent, and an additive added as necessary into a desired belt shape.

The transfer belt may include an elastic layer formed of an elastic body between the belt body and the coated layer.

### (2-2-3) Method for Producing Transfer Belt

The transfer belt 211 can be produced by the following method. The transfer belt preferably has a structure in which the belt body and the coated layer are laminated in this order.

A method of producing the belt main body is not particularly limited, and a known production method can be used. For example, the belt main body can be obtained by centrifugally molding a resin raw material that is a raw material of the above-described resin constituting the belt main body into a belt shape. The centrifugal molding can be performed using a cylindrical mold or the like. Specifically, the resin raw material can be performed by charging the resin raw material into a cylindrical mold and heating the cylindrical mold charged with the resin raw material while rotating the cylindrical mold. The heating is performed by gradually increasing the temperature of the inner surface of the rotating drum (cylindrical mold) and maintaining the temperature at about 100 to 190 °C, and preferably about 110 to 130 °C, for 20 minutes to 2 hours, to mold a self-supporting tubular belt main body. Depending on the type of the resin raw material, heating in the second stage may be performed to completely volatilize the solvent or complete the reaction.

There is no particular limitation on the method for producing the coated layer, except that the coating material according to the present embodiment is used, and any known production method can be used. For example, the coating material according to the present embodiment is applied to the surface of the belt body produced by the above-described method to form a coated layer. A method of applying the coating material onto the surface of the belt body is not particularly limited, and examples thereof include a dip coating method. After the coating material is applied to the surface of the belt main body, a heat treatment is performed under conditions of about 100 to 140 °C and about 20 to 40 minutes, so that the solvent is volatilized and a coated layer is formed on the belt main body. The temperature condition of the heat treatment and the time of the heat treatment are not limited to the above-described ranges, and can be appropriately determined according to the coating material to be used.

Transfer belt 211 may include a rubber layer between the belt body and the coated layer. The rubber layer is formed by applying a rubber layer-forming composition to the surface of the belt body. The method for applying the rubber layer-forming composition to the surface of the belt main body is not particularly limited, and examples thereof include a lip coat application method. After the rubber layer forming composition is applied to the surface of the belt body, heat treatment is performed under conditions of a temperature of about 100 to 160 °C and for about 20 to 60 minutes to volatilize the solvent, thereby forming a rubber layer on the belt body. The temperature condition of the heat treatment and the time of the heat treatment are not limited to the above-mentioned ranges, and can be appropriately determined according to the rubber layer forming composition to be used. As the rubber as a material of the rubber layer, it is preferable to use the same rubber as the rubber as a material of the rubber layer constituting the transfer roller.

### 3 transfer device

A transfer device according to an embodiment of the present disclosure includes a primary transfer section and a secondary transfer section. The primary transfer section includes a photoreceptor, an intermediate transfer member to which the toner image formed on the surface of the photoreceptor is transferred, and a primary transfer member that transfers the toner image formed on the surface of the photoreceptor to the intermediate transfer member. The secondary transfer section includes the intermediate transfer member and a secondary transfer member that secondarily transfers the toner image transferred to the surface of the intermediate transfer member to a surface of a recording medium. The primary transfer member and the secondary transfer member are transfer members of the present embodiment.

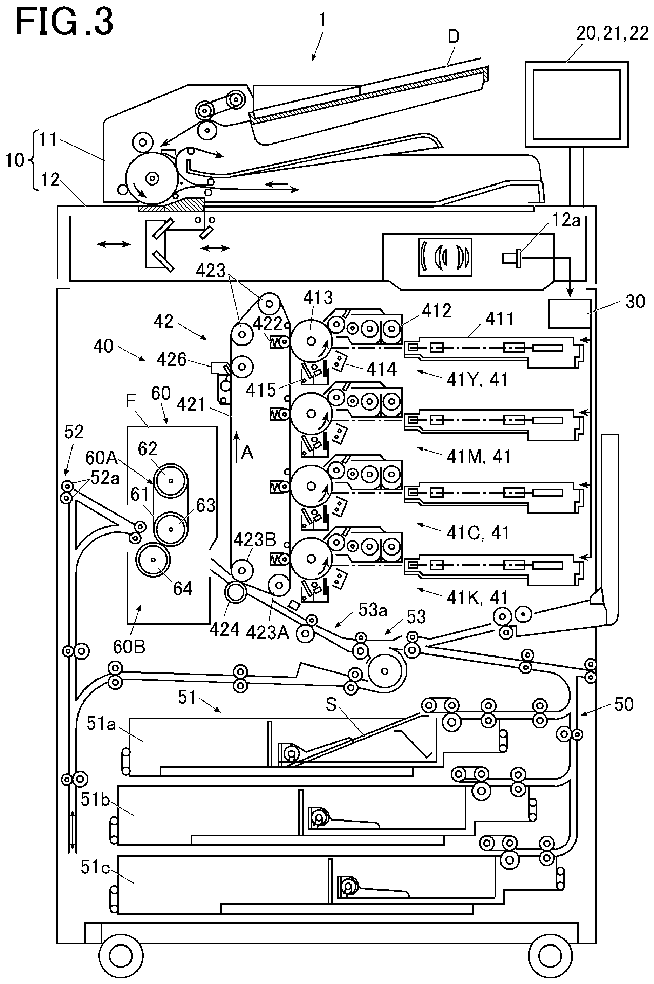

The transfer device according to the present embodiment is included in the image forming apparatus according to the present embodiment. FIG. 3 is a schematic diagram schematically showing an image forming apparatus including a transfer device having a transfer member whose surface is coated with an embodiment of the coating material of the present disclosure. The primary transfer section constituting the transfer device of the present embodiment includes a photoreceptor 413, an intermediate transfer belt 421 as an intermediate transfer member, and a primary transfer roller 422 as a primary transfer member. The secondary transfer section constituting the transfer device of the present embodiment includes an intermediate transfer belt 421 as an intermediate transfer member and a secondary transfer roller 424 as a secondary transfer member. The intermediate transfer belt 421 is a constituent element included in both the primary transfer section and the secondary transfer section.

The constituent element of the transfer device according to the present embodiment will be described in the following description of the image forming apparatus according to the present embodiment.

### 4 image forming apparatus

The image forming apparatus 1 is a color image forming apparatus of an intermediate transfer method utilizing an electrophotographic process. That is, the image forming apparatus 1 primarily transfers toner images of respective colors of Y (yellow), M (magenta), C (cyan), and K (black) formed on the photoreceptor 413 to the intermediate transfer belt 421, superimposes the toner images of four colors on the intermediate transfer belt 421, and secondarily transfers the toner images to the recording medium S, thereby forming an image.

The image forming apparatus 1 adopts a tandem-system whereby photoreceptor 413 corresponding to the four colors of Y, M, C, and K are arranged in series in a travel direction A of the intermediate transfer belt 421, and the toner images of the respective colors are sequentially transferred onto the intermediate transfer belt 421 by a single sequence.

The image forming apparatus 1 includes the transfer device of the present embodiment. The transfer device of the present embodiment includes the primary transfer section and the secondary transfer section as described above. As described above, the primary transfer section includes the photoreceptor 413, the intermediate transfer belt 421 which is an intermediate transfer member, and the primary transfer roller 422 which is a primary transfer member. The secondary transfer section includes, as described above, the intermediate transfer belt 421 as an intermediate transfer member and the secondary transfer roller 424 as a secondary transfer member.

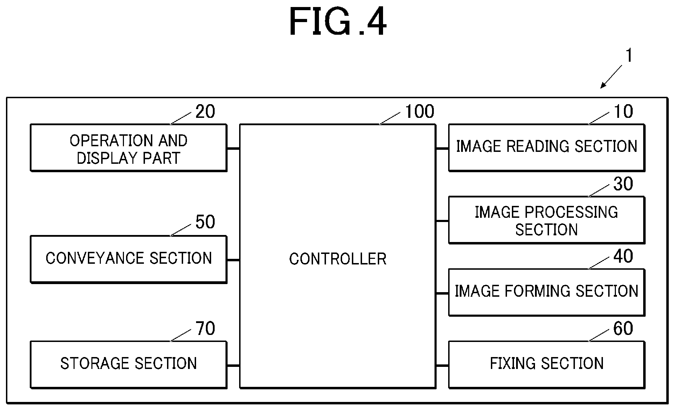

Fig. 4 is a block diagram illustrating an example of a configuration of an image forming apparatus according to an embodiment of the present disclosure. The image forming apparatus 1 includes an image reading section 10, an operation and display part 20, an image processing section 30, an image forming section 40, a conveyance section 50, a fixing section 60, and a controller 100.

The image reading section 10 includes an automatic document sheet feed device 11 called an ADF, a document image scanning device 12 such as a scanner, and the like. "ADF" is an abbreviation for "Auto Document Feeder".

The automatic document sheet feed device 11 conveys a document D placed on a document tray by a conveyance mechanism and sends the document to the document image scanning device 12. Using the automatic document sheet feed device 11, it is possible to continuously and collectively read images of a large number of documents D placed on the document tray.

The document image scanning device 12 optically scans the document conveyed from the automatic document sheet feed device 11 onto a contact glass or the document placed on the contact glass. Next, reflected light from the document is imaged on a light receiving surface of a CCD sensor 12a, and a document image is read. The image reading section 10 generates input image data based on a reading result by the document image scanning device 12. The input image data undergoes predetermined image processing in the image processing section 30. Note that "CCD" is an abbreviation of "Charge Coupled Device" and means a charge-coupled device.

The operation and display part 20 includes, for example, a liquid crystal display (LCD) with a touch screen, and functions as a display part 21 and an operation part 22. The display part 21 displays various operation screens, a state of an image, an operating status of each function, and the like according to a display control signal input from the controller 100. The operation part 22 includes various kinds of operation keys such as a numeric keypad and a start key, accepts various kinds of input operation by a user, and outputs an operation signal to the controller 100.

The image processing section 30 includes a circuit and the like that applies digital image processing to input image data in accordance with initial settings or user settings. For example, the image processing section 30 applies gradation correction on the basis of gradation correction data or a gradation correction table under the control of the controller 100. The image processing section 30 also applies, to the input image data, not only the gradation correction but also various kinds of correction processing such as color correction and shading correction, compression processing, and the like. The image forming section 40 is controlled on the basis of the processed image data.

The image forming section 40 includes image forming units 41Y, 41M, 41C, 41K, and an intermediate transfer unit 42 for forming images with toner of Y, M, C, and K components based on input image data.

The image forming unit 41Y, 41M, 41C, and 41K for the Y component, the M component, the C component, and the K component have a similar configuration. For convenience of illustration and description, common constituent elements are denoted by the same reference numerals, and when the components are distinguished from each other, Y, M, C, or K is added to the reference numerals. In Fig. 3, reference signs are representatively provided to the constituent elements of the image forming unit 41Y for the Y components and the reference signs of the constituent elements of the other image forming units 41M, 41C, and 41K are omitted.

The image forming unit 41 includes an exposure device 411, a developing device 412, a photoreceptor 413, a charging device 414, and a cleaning device 415.

The photoreceptor 413 is a negative charge type organic photoreceptor formed, for example, with an under coated layer, a charge generation layer, and a charge transport layer, sequentially stacked on a peripheral surface of an aluminum conductive cylindrical body.

The charging device 414 uniformly charges the surface of the photoreceptor 413 having photoconductivity to a negative polarity by generating corona discharge.

The exposure device 411 includes a semiconductor laser, for example, and emits laser light corresponding to images of individual color components toward the photoreceptor 413. Positive charges are generated in the charge generation layer of the photoreceptor 413 and are transported to the surface of the charge transport layer, whereby negative charges which are surface charges of the photoreceptor 413 are neutralized. On the surface of the photoreceptor 413, an electrostatic latent image of each color component is formed due to a potential difference from its surroundings.

The developing device 412 is a developing device of a two component reverse rotation method, and forms a toner image by visualizing the electrostatic latent image by causing toner of each of the color components to adhere to the surface of the photoreceptor 413. The developing device 412 forms a toner image on the surface of the photoreceptor 413 by supplying toner contained in the developer to the photoreceptor 413.

The cleaning device 415 includes a cleaning blade that comes in sliding contact with the surface of the photoreceptor 413, and removes transfer residual toner remaining on the surface of the photoreceptor 413 after primary transfer.

The intermediate transfer unit 42 includes an intermediate transfer belt 421, a primary transfer roller 422, a plurality of support rollers 423, a secondary transfer roller 424, and a cleaning device 426. The primary transfer roller 422 and the secondary transfer roller 424 correspond to transfer members.

The intermediate transfer belt 421 is an intermediate transfer member constituting the transfer device of the present embodiment. The intermediate transfer belt 421 is formed with an endless belt and stretched in a loop around the plurality of support rollers 423. At least one of the plurality of support rollers 423 is constituted by a drive roller, and the other is (are) constituted by a driven roller. The rotation of the drive roller causes the intermediate transfer belt 421 to run in the direction A at a constant speed.

The intermediate transfer belt 421 is a conductive and elastic belt. The intermediate transfer belt 421 is rotationally driven by a control signal from the controller 100. Note that the intermediate transfer belt 421 is not limited in its material, thickness, and hardness as long as it is conductive and elastic.

The primary transfer roller 422 is a primary transfer member (transfer member) constituting the transfer device of the present embodiment. The primary transfer roller 422 is arranged on an inner periphery surface side of the intermediate transfer belt 421 in a manner facing the photoreceptor 413 of each color component. The primary transfer roller 422 is brought into pressure contact with the photoreceptor 413 with the intermediate transfer belt 421 interposed therebetween, thereby forming a primary transfer nip for transferring a toner image from the photoreceptor 413 to the intermediate transfer belt 421.

The secondary transfer roller 424 is a secondary transfer member (transfer member) constituting the transfer device of the present embodiment. The secondary transfer roller 424 as a transfer member is arranged on an outer peripheral surface side of the intermediate transfer belt 421 so as to face a counter roller 423B arranged on a downstream side in a belt running direction of the drive roller 423A. The secondary transfer roller 424, the intermediate transfer belt 421, and the counter roller 423B constitute a secondary transfer section that transfers the toner image carried on the intermediate transfer belt 421 to the recording medium S. Here, the secondary transfer section is a generic name for a site related to secondary transfer. To be specific, the secondary transfer section includes the secondary transfer roller 424 and the intermediate transfer belt 421, and preferably further includes a counter roller 423B and the like. On the other hand, a site related to primary transfer including the primary transfer roller 422, the photoreceptor 413, and the intermediate transfer member 421 described above is referred to as a primary transfer section. Furthermore, an apparatus including the primary transfer section and the secondary transfer section is referred to as a transfer device.

The secondary transfer roller 424 moves between a contact position where it contacts the intermediate transfer belt 421 and a separation position where it is separated from the intermediate transfer belt 421. The secondary transfer roller 424 is located at the separation position when not performing printing, and is controlled to be located at the contact position in accordance with printing operation.

The cleaning device 426 removes transfer residual toner remaining on the surface of the intermediate transfer belt 421 after the secondary transfer.

When the intermediate transfer belt 421 passes through each of the primary transfer nips, the toner image on each of the respective photoreceptors 413 is sequentially superimposed and primarily transferred onto the intermediate transfer belt 421. Specifically, the toner image is electrostatically transferred to the intermediate transfer belt 421 by: applying primary transfer bias to the primary transfer roller 422; and applying electric charge having an opposite polarity of the toner to a back-surface side of the intermediate transfer belt 421, that is to say, a side on which the primary transfer roller 422 abuts.

Thereafter, when the recording material S passes through the secondary transfer nip, the toner image on the intermediate transfer belt 421 is secondarily transferred to the recording medium S.

The fixing section 60 includes an upper fixing section 60A having a fixing surface side member disposed on the side of the surface of the recording medium S on which the toner image is formed as the fixing surface, a lower fixing section 60B having a back surface side support member disposed on the side of the surface opposite to the fixing surface as the back surface of the recording medium S, and the like. The back surface side support member is brought into pressure contact with the fixing surface side member, so that a fixing nip for nipping and conveyance of the recording medium S is formed.

The fixing section 60 fixes the toner image on the recording medium S by heating and pressing the recording medium S, on which the toner image is secondarily transferred and which is conveyed, at the fixing nip. The fixing section 60 is disposed as a unit in a fixing device F. Further, the fixing device F may be provided with an air separation unit for separating the recording medium S from the fixing surface side member or the back surface side support member by blowing air.

The upper fixing section 60A includes an endless fixing belt 61, a heating roller 62, and a fixing roller 63, which are fixing-surface-side members. The fixing belt 61 is stretched by the heating roller 62 and the fixing roller 63.

The heating roller 62 incorporates a heating source, such as a halogen heater, and heats the fixing belt 61. The heating roller 62 is heated by the heating source, and as a result, the fixing belt 61 is heated.

The fixing roller 63 is driven and controlled by the controller 100 to rotate in the clockwise direction. As the fixing roller 63 rotates, the fixing belt 61 and the heating roller 62 are driven to rotate in the clockwise direction.

The lower fixing section 60B includes a pressure roller 64 that is a back surface-side support member. The pressure roller 64 and the fixing belt 61 define a fixing nip for holding and conveyance of a recording medium S therebetween. The pressure roller 64 is driven and controlled by the controller 100 to rotate in a counterclockwise direction.

The conveyance section 50 includes a sheet feed section 51, a sheet ejection section 52, and a conveyance route section 53. In the three sheet feed tray units 51a to 51c constituting the sheet feed section 51, the recording medium S identified based on the basis weight, the size, and the like are accommodated for each type set in advance. Examples of the recording medium S include a standard sheet and a special sheet. The conveyance route section 53 includes a plurality of conveyance roller pairs such as a registration roller pair 53a.

The recording medium S contained in the sheet feed tray units 51a to 51c is fed one by one from the top and is conveyed to the image forming section 40 by the conveyance route section 53. At this time, an inclination of the sheet fed recording medium S is corrected and a conveyance timing is adjusted by a registration roller section in which a registration roller pair 53a is arranged. Then, in the image forming section 40, the toner image on the intermediate transfer belt 421 is secondarily transferred onto one surface of the recording medium S at a time, and a fixing step is performed in the fixing section 60. The recording medium S carrying an image formation is discharged to the outside of the apparatus by the sheet ejection section 52 having a sheet ejection roller 52a.

At least one of the primary transfer section and the secondary transfer section preferably includes a cleaning mechanism (cleaner) using an electric field. The cleaning mechanism using an electric field is a mechanism in which a bias having the same polarity as that of the toner is applied to the counter roller 423B and the secondary transfer roller 424 as illustrated in FIG. 3 to transfer the toner adhering to the secondary transfer roller 424 to the intermediate transfer belt 421. The toner transferred to the intermediate transfer belt 421 is scraped off and cleaned by a cleaning blade of the cleaning device 426 in contact with the intermediate transfer belt 421.

[Block Diagram of Image Forming Apparatus] Next, a block diagram of an example of the configuration of the image forming apparatus 1 illustrated in Fig. 4 will be described. As illustrated in FIG. 4, the image forming apparatus 1 includes an image reading section 10, an operation and display part 20, an image processing section 30, an image forming section 40, a conveyance section 50, a fixing section 60, a storage section 70, and a controller 100. Note that hereinafter, a description of a configuration overlapping with the description of the image forming apparatus 1 illustrated in Fig. 3 described above will be omitted.

The controller 100 of the image forming apparatus 1 includes, for example, a CPU, a RAM, a ROM, and the like (not shown). Here, CPU is an abbreviation for Central Processing Unit. The RAM is an abbreviation for Random Access Memory. The ROM is an abbreviation for Read Only Memory. The CPU of the controller 100 reads various program stored in the ROM and develops the program in the RAM. The CPU integrally controls the operations of the image reading section 10, the operation and display part 20, the image processing section 30, the image forming section 40, the conveyance section 50, the fixing section 60, the storage section 70, and the like, which are connected via the system bus, in accordance with the expanded program.

The storage section 70 is composed of a nonvolatile memory or the like, such as an EEPROM or a flash memory. EEPROM is an abbreviation for Electrically Erasable and Programmable Read Only Memory. The storage section 70 stores a program or the like to be executed by the controller 100, and is used as an operating area of the controller 100. Further, the storage section 70 stores image formation conditions set in an image formation job, recording material information including the size and type of the recording material S, and the like. Further, examples of the image formation condition stored in the storage section 70 include an execution condition in the image forming section 40 including an interval between images continuously formed on the recording material S and an execution condition in the fixing section 60.

The controller 100 acquires image data from the input job information and performs image processing. The controller 100 performs image processing, such as shading correction, image density adjustment, and image compression, on the acquired image data, as necessary. Then, the image data processed by the controller 100 is transmitted to the image forming section 40.

The conveyance section 50 conveys the recording material S to the image forming section 40, the fixing section 60, and the like based on the control of the controller 100.

The image forming section 40 receives image data subjected to image processing by the controller 100, and forms an image on the recording material S conveyed to the image forming section 40 by the conveyance section 50 based on the image data.

The operation and display part 20 displays, on a display screen, various kinds of operation buttons, a state of the apparatus, operating status of the respective functions, and the like in accordance with instructions of display signals received from the controller 100. Furthermore, the operation and display part 20 receives input of data such as various instructions, letters, and numbers by user operation, and outputs an input signal to the controller 100.

### [Example]

Hereinafter, the present disclosure will be specifically described with reference to examples, but the present disclosure is not limited thereto. Note that in the following Examples, operations were performed at room temperature (25°C) unless otherwise specified.

### (Example 1)

As urethan resin, Takelac W6020 manufactured by Mitsui Chemicals, Inc. (solids content: 30 % by mass, solution: pure water) 140 g and pure water 28 g were placed in a 250 ml vessel. The contents of the vessel were mixed in a 2000 rpm for 3 minutes using a planetary centrifugal mixer (ARE-310) manufactured by THINKY Corporation, and defoamed in a 2200 rpm for 1 minute. Then, the mixture was filtered through a filter cloth having an opening of 100 µm to prepare a coating material. Takelac W6020 was a resin component, and its Tg was 120°C.

The coating material was applied to the roller using a nozzle (air pressure of 0. 25 MPa). The coating material was applied to the roller by reciprocating the roller once in the longitudinal direction while rotating the roller at 300 rpm. Thereafter, the resultant was dried at 120°C for 10 minutes to produce a secondary transfer roller (transfer member) of example 1.

### (Example 2)

As urethan resin, Takelac WS-5100 (solids content: 30% by mass, solvent-water) 100 g manufactured by Mitsui Chemicals, Inc., styrene-acrylic particles (solids content: 20% by mass, solvent-water) 30 g manufactured by Nippon Paint Industrial Co., Ltd, and pure water 50 g were placed in a 250 ml vessel. The contents of the vessel were mixed in a 2000 rpm for 3 minutes using a planetary centrifugal mixer (ARE-310) manufactured by THINKY Corporation, and defoamed in a 2200 rpm for 1 minute. Then, the mixture was filtered through a filter cloth having an opening of 100 µm to prepare a coating material. Takelac WS-5100 was a resin component, and its Tg was 120°C. Styrene -acrylic particles manufactured by Nippon Paint Industrial Co., Ltd. are organic particles having a mean particle size of 100 nm. The content of the organic particles was 20 parts by mass relative to 100 parts by mass of the resin component.

The coating material was applied to the roller using a nozzle (air pressure of 0. 25 MPa). The coating material was applied to the roller by reciprocating the roller once in the longitudinal direction while rotating the roller at 300 rpm. Thereafter, the resultant was dried at 120°C for 10 minutes to produce a secondary transfer roller (transfer member) of example 2.

(Example 3) As Urethan resin, Takelac WS 5100 (solids content: 30% by mass,solvent-water) 110 g manufactured by Mitsui Chemicals, Inc., styrene-acrylic particles (solids content: 20% by mass, solvent-water) 50 g manufactured by Nippon Paint Industrial Coatings Co., Ltd, and pure water 12 g were placed in a 250 ml vessel. The contents of the vessel were mixed in a 2000 rpm for 3 minutes using a planetary centrifugal mixer (ARE-310) manufactured by THINKY Corporation, and defoamed in a 2200 rpm for 1 minute. The mixture was filtered through a filter cloth having an opening of 100 µm to prepare a coating material. Takelac WS-5100 is a resin component. The styrene-acrylic particles manufactured by Nippon Paint Industrial Co., Ltd. are Fine Sphere MG 651, which are organic particles having a mean particle size of 150 nm. The content of the organic particles was 30 parts by mass relative to 100 parts by mass of the resin component.

The coating material was applied to the roller using a nozzle (air pressure of 0. 25 MPa). The coating material was applied to the roller by reciprocating the roller once in the longitudinal direction while rotating the roller at 300 rpm. Thereafter, the resultant was dried at 120°C for 10 minutes to produce a secondary transfer roller (transfer member) of example 3.

### (Comparative Example 1)

urethane resin Takelac WPB341 manufactured by Mitsui Chemicals, Inc. (solids content: 30%, solution: pure water) 125 g and pure water 25 g were placed in a 250 ml vessel. The contents of the vessel were mixed in a 2000 rpm for 3 minutes using a planetary centrifugal mixer (ARE-310) manufactured by THINKY Corporation, and defoamed in a 2200 rpm for 1 minute. The mixture was filtered through a filter cloth having an opening of 100 µm to prepare a coating material. Takelac WPB341 was a resin component, and its Tg was 110°C.

The coating material was applied to the roller using a nozzle (air pressure of 0. 25 MPa). The coating material was applied to the roller by reciprocating the roller once in the longitudinal direction while rotating the roller at 300 rpm. Thereafter, the resultant was dried at 120°C for 10 minutes to produce a secondary transfer roller (transfer member) of comparative example 1.

### (Comparative Example 2)

As urethane resin, Takelac WS6020 (solids content: 30%,solvent-water) 120 g manufactured by Mitsui Chemicals, Inc., Modiper FS770 (solids content: 15% % by mass, solvent-water) 12 g manufactured by Nof Corp., and pure water 20 g were placed in a 250 ml vessel. The contents of the vessel were mixed in a 2000 rpm for 3 minutes using a planetary centrifugal mixer (ARE-310) manufactured by THINKY Corporation, and defoamed in a 2200 rpm for 1 minute. The mixture was filtered through a filter cloth having an opening of 100 µm to prepare a coating material. Takelac WS6020 was a resin component, and its Tg was 90°C. Modiper FS770 contained a silicone-based resin. Modiper FS770 manufactured by Nof Corp. is organic particles. The content of the organic particles was 5 parts by mass relative to 100 parts by mass of the resin component.

The coating material was applied to the roller using a nozzle (air pressure of 0. 25 MPa). The coating material was applied to the roller by reciprocating the roller once in the longitudinal direction while rotating the roller at 300 rpm. Thereafter, the resultant was dried at 120°C for 10 minutes to produce a secondary transfer roller (transfer member) of comparative example 2.

### (Comparative Example 3)

urethane resin Takelac WS 5100 (solids content: 30 % by mass, solventwater) 100 g manufactured by Mitsui Chemicals, Inc., silicone particles X-52 7030 manufactured by Shin - Etsu Chemical Co., Ltd., 7. 2 g, and pure water 74 g were placed in a 250 ml vessel. The contents of the vessel were mixed in a 2000 rpm for 3 minutes using a planetary centrifugal mixer (ARE-310) manufactured by THINKY Corporation, and defoamed in a 2200 rpm for 1 minute. The mixture was filtered through a filter cloth having an opening of 100 µm to prepare a coating material. Takelac WS-5100 is a resin component. Silicone particles X-52-7030 available from Shin - Etsu Silicone are organic particles having a mean particle size of 100 nm. The content of the organic particles was 20 parts by mass relative to 100 parts by mass of the resin component.

The coating material was applied to the roller using a nozzle (air pressure of 0. 25 MPa). The coating material was applied to the roller by reciprocating the roller once in the longitudinal direction while rotating the roller at 300 rpm. Thereafter, the resultant was dried at 120°C for 10 minutes to produce a secondary transfer roller (transfer member) of comparative example 3.

### (Comparative Example 4)

Takelac WS6021 (solids content: 30% by mass, solvent-water) 100 g manufactured by Mitsui Chemicals, Inc., styrene acrylic particles (solids content: 20% by mass, solvent-water) 30 g manufactured by Nippon Paint Industrial Co., Ltd, and pure water 50 g were added as urethane resin to a 250 ml vessel. The mixture was mixed in a 2000 rpm for 3 minutes and defoamed in a 2200 rpm for 1 minute using a planetary centrifugal mixer (ARE-310) manufactured by THINKY, Ltd. The mixture was filtered through a filter cloth having an opening of 100 µm to prepare a coating material. Takelac WS6021 was a resin component, and its Tg was 40°C. Styrene -acrylic particles available from Nippon Paint Industrial Co., Ltd. are organic particles. The content of the organic particles was 20 parts by mass relative to 100 parts by mass of the resin component.

The coating material was applied to the roller using a nozzle (air pressure of 0. 25 MPa). The coating material was applied to the roller by reciprocating the roller once in the longitudinal direction while rotating the roller at 300 rpm. Thereafter, the resultant was dried at 120°C for 10 minutes to produce a secondary transfer roller (transfer member) of comparative example 4.

For the obtained secondary transfer roller (transfer member), the surface free energy, the adhesion force, and the electric field cleaning property were measured and evaluated. The obtained evaluation results are listed in Table 1.

### (surface free energy)

The contact angles were measured with a contact angle meter DMC MC3 manufactured by Kyowa Interface Science Co., Ltd. The contact angles (droplet method, θ/2 method) of water and diiodomethane are measured at five points on the secondary transfer roller. Then, for each of water and diiodomethane, the average value of the measurement values at the five positions is calculated. The dispersion components and polar components of surface free energy were calculated from the obtained contact angles with water and diiodomethane using Owens and Wendt's theoretical formula. The obtained results are shown in Table 1.

### (adhesion force)

A secondary transfer roller is attached to a printer, and magenta toner is made to adhere to the secondary transfer roller by operating the printer. As the printer main body, a full color printing machine AccurioPress C7100 (manufactured by Konica Minolta, Inc) is used. Next, the secondary transfer roller is taken out. Then, air is blown against the toner adhering to the detached secondary transfer roller from a position at a height of 10 mm at an air pressure of 0. 05 MPa to blow off the toner. The flying state of the toner is evaluated as the adhesion force of the secondary transfer roller. As an evaluation method, a method of observing an area in which the toner flies from the surface of the secondary transfer roller after the air is blown with a microscope and ranking a state in which the toner flies is used. The A rating is the most preferable, and the B rating is the second most preferable. The evaluations C and D are problematic in practical use, and the evaluation D is the worst evaluation.
A: The areas to which no toner adheres are 5 mm² or more.
B: Areas to which no toner adheres are equal to or more than the 2.5 mm ² and less than the 5 mm ².
C: There are areas where no toner is attached, but less than the 2.5 mm ².
D: No toner flies.

### (electric field cleaning property)

A secondary transfer roller is attached to a printer body, and the printer body is operated. To evaluate the state of an image transferred on a secondary transfer roller after black toner stuck to the secondary transfer roller at the time of paper passing is subjected to electric field cleaning. As the printer main body, a full color printing machine AccurioPress C7100 (manufactured by Konica Minolta, Inc) is used. A method for evaluating the state of the image transferred onto the secondary transfer roller is as follows. Using a full color printing machine AccurioPress C7100 (manufactured by Konica Minolta, Inc), 20 white solid images are printed under an environment of 20°C and 50% RH, and the image on the 20th sheet is scanned with a scanner. The scanned image is imported by image editing software (manufactured by Adobe Systems Incorporated, Adobe Photoshop CS6) and converted into a monochrome image. Thereafter, the blackening ratio of the scanned image is calculated with the same software. The blackening ratio is measured 10 times, and the average value is defined as the blackening ratio. Here, a portion in which the white background portion is fogged with toner is recognized as black. That is, the blackening ratio represents an area ratio of a black spot portion of an image, and is 100% in a solid black image and 0% in a white paper. In the present evaluation, when the blackening ratio is less than 0.15%, there is no practical problem, and when the blackening ratio is less than 0.30, it is within a practically allowable range, and therefore, when the blackening ratio is less than 0.30, it indicates a good result. The blackening ratio is most preferably less than 0.05%.
A: The blackening ratio is less than 0.05%.
B: The blackening ratio is 0.05% or more and less than 0.15%.
C: The blackening ratio is 0.15% or more and less than 0.3%.
D: A blackening ratio is 0.3% or more.

### [Table 1]

**TABLE 1**

| | | | | EXAMPLE 1 | EXAMPLE 2 | EXAMPLE 3 | COMPARATIVE EXAMPLE 1 | COMPARATIVE EXAMPLE 2 | COMPARATIVE EXAMPLE 3 | COMPARATIVE EXAMPLE 4 |
|---|---|---|---|---|---|---|---|---|---|---|
| COATING MATERIAL | RESIN COMPONENT | W6020 | (g) | 140 | - | - | - | - | - | - |
| | | WS-5100 | (g) | - | 100 | 110 | - | - | 100 | - |
| | | WPB341 | (g) | - | - | - | 125 | - | - | - |
| | | WS6020 | (g) | - | - | - | - | 120 | - | - |
| | | WS6021 | (g) | - | - | - | - | - | - | 100 |
| | ORGANIC PARTICLES | StAc | (g) | - | 30 | 50 | - | - | - | 30 |
| | | FS770 | (g) | - | - | - | - | 12 | - | - |
| | | X-52-7030 | (g) | - | - | - | - | - | 7.2 | - |
| | WATER | PURE WATER | (g) | 28 | 50 | 12 | 25 | 20 | 74 | 50 |
| EVALUATION OF SECONDARY TRANSFER ROLLER | | | | | | | | | | |
| POLAR COMPONENT | | | | 5.8 | 4.0 | 4.0 | 21.7 | 2.8 | 7.2 | 37.3 |
| DISPERSION COMPONENT | | | | 35.5 | 31.0 | 34.0 | 36.3 | 27.5 | 12.2 | 13.3 |
| ADHESION FORCE | | | | B | A | A | D | C | D | D |
| ELECTRIC FIELD CLEANING PROPERTIES | | | | B | A | A | D | D | D | D |

In Table 1, "W6020" indicates Takelac W6020 manufactured by Mitsui Chemicals, Inc. (solids content: 30% by mass). WS-5100 represents Takelac WS-5100 (solid content: 30% by mass, solvent: water) manufactured by Mitsui Chemicals, Inc. The WPB341 indicates Takelac WPB341 (solids content: 30%, solventwater) manufactured by Mitsui Chemicals, Inc. Reference numeral WS6020 represents Takelac WS6020 (solids content: 30%,solvent-water) manufactured by Mitsui Chemicals, Inc. WS6021 indicates Takelac WS6021 (solids content: 30 % by mass,solvent-water) manufactured by Mitsui Chemicals, Inc. StAc indicates styrene-acrylic particles (solid content: 20 % by mass, solvent: water) manufactured by Nippon Paint Industrial Co., Ltd. The reference numeral FS770 indicates Modiper FS770 (solids content: 15% by mass, solvent-water) available from Nof Corp. x-52-7030 Represents silicone particles X-52-7030 manufactured by Shin - Etsu Silicone Co., Ltd. The polar component refers to a component of the surface free energy based on hydrogen bonding and dipole-dipole interaction.

It is understood from examples 1 to 3 that when the coating material included resins having a urethane structure, did not include fluorine-containing resins and silicon-containing resins, and satisfied the requirements of "0. 1≤γ_{SV}^{h}≤7 and 0. 1≤γ _{SV}^{d}≤40", the evaluation of adhesion force and the evaluation of electric field cleaning performance were satisfactory. The γ_{SV}^{h} is a polar component of the surface free energy of the coating film of the coating material, and the γ_{SV}^{d}, is a dispersion component of the surface free energy of the coating film of the coating material.

From comparative example 1, it can be seen that when the polar component exceeds 7, both the evaluation of the adhesion force and the evaluation of the electric field cleaning property are D, which are poor evaluation results. It is understood from comparative example 2 that when organic particles containing a silicone-based resin are contained, the evaluation result is poor such that the evaluation of adhesion force is C and the evaluation of electric field cleaning ability is D. It is found from comparative example 3 that in a case where the organic particles including a silicone-based resin are contained, both the evaluation of the adhesion force and the evaluation of the electric field cleaning performance are D, which is a poor evaluation result. From comparative example 4, it can be seen that when the polar component exceeds 7, both the evaluation of the adhesion force and the evaluation of the electric field cleaning property are D, which are poor evaluation results.

An embodiment of the present disclosure is a coating material used for coating a transfer member included in an image forming apparatus. The coating material of the present embodiment contains a resin having a urethane structure as a resin component, and does not contain a resin containing a fluorine atom and a resin containing a silicon atom. The coating material of the present embodiment is 0. 1≤ γ_{SV}^{h} ≤7 and 0. 1≤ γ _{SV}^{d} ≤40, where γ_{SV}^{h} is the component based on hydrogen bonding and dipole-dipole interactions of the surface free energy in the coating film after coating, and γ_{SV}^{d}, is the dispersion component of the surface free energy. Therefore, the coating material of the present embodiment does not contain both a fluorine-based compound and a silicone-based compound, and has good toner releasability when coated on the surface of a transfer member. Here, a component of the surface free energy based on hydrogen bonding and dipole-dipole interaction is sometimes referred to as a polar component.

The expression mechanism or action mechanism of the effect of the present embodiment is not clear, but it is presumed as follows.

A coating material for coating the surface of the transfer system part (transfer member) is usually an organic material. The toner particle is a particle including a resin particle which is an organic material and an external additive such as an inorganic particle which covers the surface of the resin particle. In the surface free energy, it is presumed that a force by which molecules are attracted to each other is dominant in the dispersion component, and a force of hydrogen bonding is dominant in the component (polar component) based on hydrogen bonding and dipole-dipole interaction. It is presumed that the dispersion components γ _{SV}^{d} of the surfaces of the transfer system parts on which the coating films (coated layers) of the coating material are formed affect the forces with which the surfaces of the coating films attract the toner resin particles. It is also assumed that the polar components γ_{SV}h on the surfaces of the transfer system parts having the coating films of the coating material formed thereon affect the attraction of the surfaces of the coating films for the inorganic particles of the toner._{SV}^{h} on the surfaces of the transfer system parts having the coating films of the coating material formed thereon affect the attraction of the surfaces of the coating films for the inorganic particles of the toner. When the sum of the dispersion components γ_{SV}^{d}, and the polar components γ_{SV}^{h} is smaller than the "power of separating the toner from the coating film surface by an electric field in electric field cleaning", it is presumed that the transfer system parts can be cleaned by the electric field.

To be more specific, in the case of "0. 1≤ γ_{SV}^{h}≤7", the power of separating the toner from the coating film surfaces by the electric field in the electric field cleaning is larger than the power of attracting the coating film surfaces and the inorganic particles of the toner to each other. In the case of "0. 1≤ γ_{SV}^{d}≤40", the power of separating the toner from the coating film surfaces by the electric field in the electric field cleaning is larger than the attracting force of the coating film surfaces and the resin particles of the toner.

According to the present disclosure, it is possible to provide a coating material that has good toner releasability when coated on a surface of a transfer member without containing both a fluorine-based compound and a silicone-based compound. In addition, it is possible to provide a transfer member whose surface is coated with the coating material, a transfer device including the transfer member, and an image forming apparatus including the transfer device.

Although embodiments of the present invention have been described and illustrated in detail, the disclosed embodiments are made for purposes of illustration and example only and not limitation. The scope of the present invention should be interpreted by terms of the appended claims.

## Claims

1. A coating material that is used for coating a transfer member (201) included in an image forming apparatus, the coating material comprising a resin having a urethane structure as a resin component, wherein
the coating material does not include a resin containing a fluorine atom and a resin containing a silicon atom, and
when a component based on hydrogen bonding and dipole-dipole interaction of surface free energy in a coating film after coating is defined as γ_{SV}^{h} and a dispersion component of the surface free energy is defined as γ_{SV}^{d}, 0. 1≤γ _{SV}^{h}≤7 and 0. 1≤γ _{SV}^{d}≤40 are satisfied.

2. The coating material according to claim 1, wherein the surface free energy is surface free energy calculated from contact angles of water and diiodomethane.

3. The coating material according to claim 1, wherein
the transfer member is at least one of a transfer roller and a transfer belt included in the image forming apparatus,
the transfer roller is at least one of a primary transfer roller (422) and a secondary transfer roller (424), and
the transfer belt is at least one of a primary transfer belt and a secondary transfer belt.

4. The coating material according to claim 1, wherein
the coating material contains organic particles having a particle size of 100 nm to 1000 nm, and
a content of the organic particles is 5 to 40 parts by mass relative to 100 parts by mass of the resin component.

5. The coating material according to claim 4, wherein the content of the organic particles is 10 to 30 parts by mass relative to 100 parts by mass of the resin component.

6. The coating material according to claim 4, wherein the organic particles comprise a resin having at least a styrene-acrylic structure.

7. The coating material according to claim 1, wherein the resin having the urethane structure has a glass transition temperature of 90 °C or higher.

8. A transfer member included in an image forming apparatus, the transfer member including a surface coated with the coating material according to any one of claims 1 to 7.

9. A transfer device comprising:
a primary transfer section that includes a photoreceptor, an intermediate transfer member to which a toner image formed on a surface of the photoreceptor is transferred, and a primary transfer member that transfers the toner image formed on the surface of the photoreceptor onto the intermediate transfer member; and
a secondary transfer section that includes the intermediate transfer member and a secondary transfer member that secondarily transfers the toner image transferred to a surface of the intermediate transfer member, onto a surface of a recording medium, wherein
each of the primary transfer member and the secondary transfer member is the transfer member according to claim 8.

10. The transfer device according to claim 9, wherein at least one of the primary transfer section and the secondary transfer section includes a cleaner using an electric field.

11. An image forming apparatus comprising the transfer device according to claim 9.
